# EUROPEAN PATENT APPLICATION

(11) **EP 2 282 394 A1**
(43) Date of publication of application: **09.02.2011**
(21) Application number: 09823458.6
(22) Date of filing: 07.10.2009
(51) Int. Cl.: H02K 5/173, B60K 6/26, B60K 6/387, B60K 6/40, B60K 6/405, B60K 6/48, B60L 11/14, F16N 7/18, H02K 5/167, H02K 7/18

(54) **DRIVE DEVICE FOR VEHICLE**

(30) Priority: 31.10.2008 JP 2008281928
(71) Applicant: Aisin AW Co., Ltd., Fujii-cho Anjo-shi Aichi 444-1192 (JP)
(72) Inventor: KATO Hiroshi, Anjo-shi Aichi 444-1192 (JP); NISHIDA Masaaki, Anjo-shi Aichi 444-1192 (JP)
(74) Representative: TBK-Patent
(86) International application number: PCT/JP2009/067477
(87) International publication number: WO 2010/050345

(57) **Abstract**

To provide a vehicle drive device in which oil does not fall onto a rotor while supplying and discharging the oil to and from a bearing for rotatably supporting the rotor in order to lubricate the bearing, thereby suppressing an increase in device size.

A vehicle drive device 1 that includes a rotating electrical machine 3 having a rotor 3b and a stator 3c, and a rotation shaft 2 having a rotation shaft center X includes: a partition wall 11 defining at least a part of a space for accommodating the rotating electrical machine 3; a rotor support member 50 that rotates about the rotation shaft center and supports the rotor; a bearing 61 disposed between the rotor support member and the partition wall; a first seal member 71 that forms a first oil chamber 81 that is in contact with one side end of the bearing; a second seal member 72 that forms a second oil chamber 82 that is in contact with the other side end of the bearing; a supply oil passage 80 for supplying oil to the first oil chamber; and a discharge oil passage 83 for discharging oil from the second oil chamber.

## Description

### TECHNICAL FIELD

The present invention relates to a vehicle drive device that includes a rotating electrical machine having a rotor and a stator, and a rotation shaft having a rotation shaft center. More particularly, the present invention relates to a structure for lubricating a bearing for rotatably supporting a rotor support member for supporting a rotor.

### BACKGROUND ART

Such bearings as described above have been conventionally used in hybrid vehicle drive devices (see, e.g., Patent Document 1). In one form of the hybrid vehicle drive device disclosed therein (see FIG. 2 of Patent Document 1), a ball bearing serving as a bearing is disposed between a sleeve-like inner end of a rotor support member and an end wall (a partition wall) of a motor casing, whereby the rotor support member is supported by the end wall of the motor casing so as to be rotatable about the same shaft center as that of a stator. Moreover, a clutch is provided between an intermediate shaft receiving an engine output, and an input shaft of a speed change mechanism. A seal member is disposed between a clutch housing and the intermediate shaft to prevent oil lubricating the inside of the clutch housing from leaking to the outside. Since the rotor support member is disposed outside the clutch housing, the ball bearing cannot receive the oil lubricating the clutch and the speed change mechanism. This results in a disadvantage that a grease-enclosed bearing having a low allowable rotational speed needs to be used as this ball bearing disposed between the rotor support member and the partition wall.

Moreover, another form of the hybrid vehicle drive device shown in FIG. 4 of Patent Document 1 uses a structure in which a seal member is disposed between the end wall (partition wall) of the motor casing and the intermediate wall, so that the oil falls not only onto the clutch, but also onto the ball bearing and a rotor. The ball bearing receives a lubricating effect by the oil falling thereon. However, since the oil falls also onto a rotor region, the use of a large-diameter rotor causes force loss due to the rotor stirring the oil in a lower region where the oil accumulates. In order to avoid such force loss, the rotor diameter cannot be increased, resulting in a disadvantage that the axial dimension of the rotor is increased in order to obtain a required driving force.

### [Related Art Document]

### [Patent Document]

[Patent Document 1] WO2006/054661A1

### DISCLOSURE OF THE INVENTION

### [Problem to be Solved by the Invention]

In view of the above problems, it is an object of the present invention to provide a vehicle drive device in which no oil falls onto a rotor while supplying oil to a bearing for rotatably supporting the rotor in order to lubricate the bearing, thereby suppressing an increase in device size.

### [Means for Solving the Problem]

In order to achieve the above object, a vehicle drive device of the present invention that includes a rotating electrical machine having a rotor and a stator, and a rotation shaft having a rotation shaft center has a characteristic structure in which the vehicle drive device includes: a partition wall defining at least a part of a space for accommodating the rotating electrical machine; a rotor support member that rotates about the rotation shaft center and supports the rotor; a bearing disposed between the rotor support member and the partition wall; a first seal member that forms a first oil chamber that is in contact with one side end of the bearing; a second seal member that forms a second oil chamber that is in contact with the other side end of the bearing; a supply oil passage for supplying oil to the first oil chamber; and a discharge oil passage for discharging oil from the second oil chamber.

According to the above characteristic structure, the bearing that enables relative rotation between the rotor support member and the partition wall is disposed in a space that is made oil-tight by the first seal member and the second seal member, and oil is supplied through the supply oil passage to the first oil chamber serving as a section of the space which is in contact with the one side end of the bearing. Moreover, the oil, which has flowed from the first oil chamber and passed through the bearing, reaches the second oil chamber serving as a section of the space which is in contact with the other side end of the bearing, and then, is discharged from the second oil chamber through the discharge oil passage. Thus, the oil is supplied to and discharged from the bearing that rotatably supports the rotor through the rotor support member in a sealed state with respect to the rotating electrical machine. Accordingly, the rotating electrical machine can be kept dry, while sufficiently lubricating the bearing by the oil flow, and also, an increase in size of the drive device can be suppressed.

In one preferred embodiment of the present invention, the rotation shaft is formed by an input shaft portion and an output shaft portion which are disposed coaxially with each other, a clutch is provided between the input shaft portion and the output shaft portion, the rotor support member forms a clutch housing for accommodating the clutch, and the supply oil passage uses oil in the clutch housing as a supply source. This provides an advantage in that not only the structure of the supply oil passage to the bearing is simplified, but also a common member can be used both as the clutch housing and the rotor support member.

In another preferred embodiment of the present invention, the first oil chamber is defined at least by the partition wall and the rotation shaft, the first seal member seals a space between the partition wall and the rotation shaft, the second oil chamber is defined at least by the partition wall and the rotor support member, and the second seal member seals a space between the partition wall and the rotor support member. In this characteristic structure, the space where the bearing is disposed is defined at least by the partition wall, the rotation shaft, the first seal member, the rotor support member, and the second seal member, and the first oil chamber and the second oil chamber, which function as an oil supply chamber or an oil discharge chamber, are formed by attaching the bearing. Thus, a flow passage for causing the oil to flow to the bearing can be formed by a substantially existing member, which is advantageous both economically and structurally.

In order to suppress an increase in size of the drive device, it is necessary that formation of the discharge oil passage do not involve extension of a drive device housing. Thus, it is preferable to dispose the discharge oil passage around the peripheral wall where a free space is most likely to be secured. In a preferred embodiment, the discharge oil passage is disposed along the partition wall. In terms of effective use of the space, it is preferable that the discharge oil passage extend in a radial direction of the rotation shaft center.

As one preferred embodiment for forming the discharge oil passage without involving design change of the partition wall as much as possible, it is proposed that the discharge oil passage include an oil passage provided in the partition wall, and an oil passage provided in an oil passage bracket that is attached to an outer surface of the partition wall. Especially, forming the oil passage provided in the partition wall by a through hole or an opening is desirable because the discharge oil passage can be formed by merely attaching the oil passage bracket to the partition wall. However, when no space for attaching the oil passage bracket can be secured in the partition wall, it is possible to use a structure in which an oil passage bracket is fitted in a cutout provided in the partition wall, and the discharge oil passage is formed in the oil passage bracket. This can prevent the oil passage bracket from protruding from the partition wall, whereby the problem of securing the space for the oil passage bracket can be eliminated.

In one specific embodiment of the present invention, the partition wall includes a cylindrical and axially protruding portion that protrudes toward the rotating electrical machine in a direction of the rotation shaft, the rotor support member is rotatably supported by an inner peripheral surface of the axially protruding portion through the bearing, the first seal member seals a space between the rotation shaft and a radial inner end of the partition wall which is located on one side of the bearing, and the second seal member seals a space between the rotor support member and a portion of the axially protruding portion that extends to the other side of the bearing. In this structure, a reliably sealed oil flow space is formed on both sides of the bearing by the first seal member, the second seal member, the rotation shaft, the partition wall, and the rotor support member by merely simply processing the partition wall and the rotor support member.

In still another preferred embodiment of the present invention, the vehicle drive device further includes a second bearing disposed on an inner peripheral surface of a radial inner end of the rotor support member, and in the vehicle drive device, the rotation shaft is supported by the rotor support member through the second bearing so as to be rotatable relative to the rotor support member, and the supply oil passage is formed so as to pass through the second bearing. In this structure, the second bearing disposed on the inner peripheral surface of the radial inner end of the rotor support member, that is, another bearing for rotatably supporting the rotation shaft, can also be lubricated by the oil flowing through a supply oil passage that can be used in common with the above bearing. This structure is very advantageous both economically and structurally in that oil is supplied to the first bearing for rotatably supporting the rotor support member and the second bearing for rotatably supporting the rotation shaft by using an at least partially common supply oil passage.

When a structure in which the vehicle drive device further includes a second partition wall disposed on an opposite side to the partition wall in an axial direction with the rotating electrical machine interposed therebetween, and the space for accommodating the rotating electrical machine is formed between the partition wall and the second partition wall is used as a further preferred embodiment of the present invention, oil can be effectively prevented from falling onto the rotating electrical machine due to other constituent elements.

In another specific embodiment of the present invention, the vehicle drive device further includes a third bearing disposed on an inner peripheral surface of a radial inner end of the second partition wall, and in the vehicle drive device, the rotation shaft connected to the rotor support member is rotatably supported by the second partition wall through the third bearing, and a third seal member that seals a space between the second partition wall and the clutch housing is disposed on the rotating electrical machine side of the third bearing. This characteristic structure not only supports the rotation shaft by the second partition wall through the bearing, but also reliably seals the gap between the second partition wall and the clutch housing, whereby oil is prevented from flowing through this gap toward the rotating electrical machine, even when the oil is present outside the second partition wall.

Especially when the present invention is applied to a one-motor parallel-type hybrid vehicle drive device, a structure in which an engine output and a motor output are transmitted to the output shaft portion is easily implemented by using a structure in which the input shaft portion is connected to an engine, and the output shaft portion is connected to the rotor of the rotating electrical machine.

Moreover, the use of a structure in which a rotation sensor for detecting a rotation position of the rotor of the rotating electrical machine is disposed radially outside the axially protruding portion can contribute to suppression of an increase in axial dimension of the vehicle drive device.

As described above, the vehicle drive device of the present invention uses a structure in which the space for accommodating the rotating electrical machine is isolated from an oil flow path. This eliminates the problem of oil falling onto the rotating electrical machine, while supplying and discharging oil to and from a bearing for rotatably supporting the rotor in order to lubricate the bearing.

### BRIEF DESCRIPTION OF THE DRAWINGS

[FIG. 1] FIG. 1 is a cross-sectional view showing an embodiment of a vehicle drive device according to the present invention.
[FIG. 2] FIG. 2 is an enlarged view showing a supply oil passage and a discharge oil passage in FIG. 1.
[FIG. 3] FIG. 3 is a schematic view of an oil passage bracket attached to a partition wall.
[FIG. 4] FIG. 4 is an enlarged view corresponding to FIG. 2 in another embodiment of the present invention.
[FIG. 5] FIG. 5 is a schematic view of an oil passage bracket in another embodiment of the present invention.
[FIG. 6] FIG. 6 is a cross-sectional view of the oil passage bracket and a cutout which are shown in FIG. 5.

### BEST MODES FOR CARRYING OUT THE INVENTION

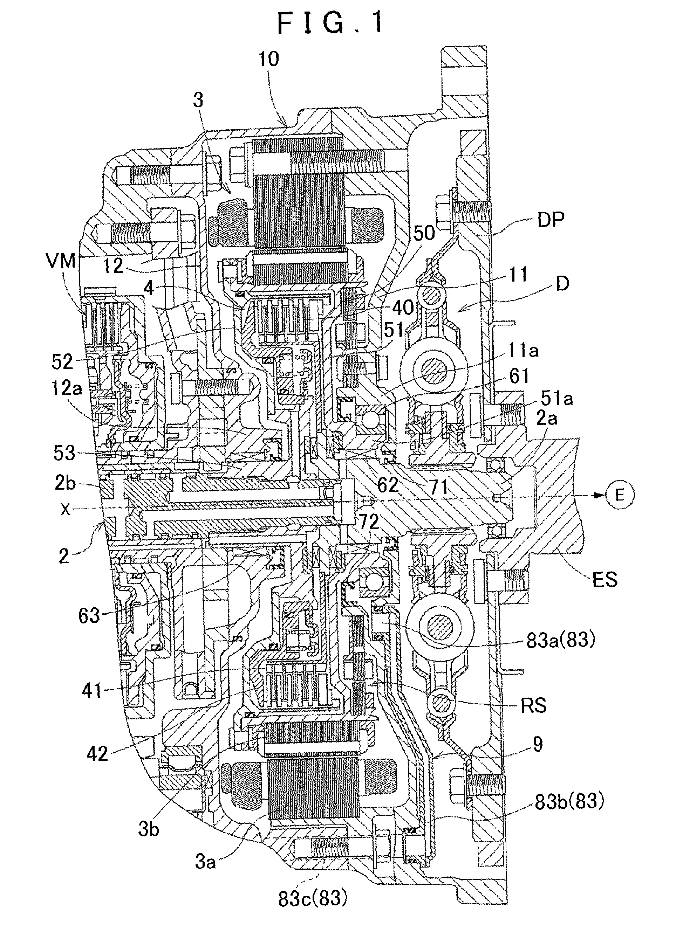

Embodiments of the present invention will be described below with reference to the accompanying drawings. A vehicle drive device shown in FIG. 1 is a so-called one-motor parallel-type hybrid vehicle drive device 1, and includes: a rotation shaft 2 having a rotational shaft center X coaxial with an engine output shaft ES of an engine E only a reference character of which is shown in the drawing; a rotating electrical machine 3; a clutch 4; and a speed change mechanism VM only a right end of which is shown in the drawing. This group of constituent elements is accommodated in a transmission housing 10. The rotations shaft 2 is formed by an input shaft portion 2a formed as a cylinder shaft, and an output shaft portion 2b fitted in the input shaft portion 2a. The input shaft portion 2a is connected to the engine output shaft ES through a damper mechanism D. The damper mechanism D is known in the art, and connects a drive plate DP fixed to the engine output shaft ES and the input shaft portion 2a though a coil spring disposed along a circumferential direction. When a driving force of the engine is applied to the input shaft portion 2a, the coil spring is compressed to absorb shock of a torsional direction which is applied to the input shaft portion 2a. Power transmission between the input shaft portion 2a and the output shaft portion 2b is switched between a connected state where the power can be transmitted by the clutch 4, and a disconnected state where the power cannot be transmitted. The output shaft portion 2b can directly receive a rotation output of the rotating electrical machine 3. The rotating power of one or both of the engine and the rotating electrical machine 3, which is transmitted to the output shaft portion 2b, is transmitted to front or rear wheels or both the front and rear wheels of a vehicle through the speed change mechanism VM and a differential mechanism that is not shown.

The clutch 4 includes a clutch housing 50, and a wet multi-plate clutch mechanism 40 disposed in the housing 50. The clutch housing 50 is formed by a bowl-like member 51 having a boss hole for passing the input shaft portion 2a therethrough, a disc member 52 having a peripheral wall (hereinafter referred to as the peripheral-walled disc member 52), and a boss member 53 having a boss hole for passing the output shaft potion 2b therethrough. In order to form a space for accommodating the wet multi-plate clutch mechanism 40, the bowl-like member 51 forms an outer peripheral wall of the clutch housing 50 and a first sidewall of the clutch housing 50, and the peripheral-walled disc member 52 and the boss member 53 form a second sidewall of the clutch housing 50. A first bearing (a ball bearing in this example) 61 is disposed between an outer peripheral surface of a boss portion 51a of the bowl-like member 51 that protrudes outward and a boss-like axially protruding portion 11a of a first partition wall 11 of the transmission housing 10 that axially protrudes so as to rotatably support the bowl-like member 51. Moreover, a second bearing (a needle bearing in this example) 62 is disposed between an inner peripheral surface of the boss portion 51 a, which is formed at a radial inner end of the bowl-like member 51, and the input shaft portion 2a so as to rotatably support the input shaft portion 2a (the rotation shaft 2). Thus, the bowl-like member 51 is supported so as to be rotatable about the rotation shaft center X relative to the first partition wall 11 and the input shaft portion 2a. The peripheral-walled disc member 52 is connected to an end of a peripheral wall of the bowl-like member 51 at a position near an outer peripheral edge of a disc-like portion of the peripheral-walled disc member 52. The boss member 53 is connected to the peripheral-walled disc member 52 at a position near a tip of a radially protruding flange portion of the boss member 53. Moreover, a boss inner peripheral surface of the boss member 53 is spline connected to the output shaft portion 2b. A boss portion 12a is formed at a radial inner end of a second partition wall 12 of the transmission housing 10. Moreover, a third bearing (a needle bearing in this example) 63 is disposed between a boss outer peripheral surface of the boss member 53 and the boss portion 12a of the second partition wall 12.

The wet multi-plate clutch mechanism 40 includes an input-side member 41, a piston 42, a spring for applying a biasing force to the piston 42, and a plurality of inner friction plates and a plurality of outer friction plates. The input-side member 41 is fixed to the input shaft portion 2a. The piston 42 is slidably supported on the peripheral wall of the peripheral-walled disc member 52 of the clutch housing 50. The plurality of inner friction plates are assembled into the input-side member 41 in an axially movable state. The plurality of outer friction plates are assembled into an inner peripheral surface of a peripheral wall portion of the peripheral-walled disc member 52 that axially extends so as to be respectively interposed between the inner friction plates in an axially movable state. Thus, the peripheral-walled disc member 52 and the boss member 53 of the clutch housing 50 form an output-side member of the wet multi-plate clutch mechanism 40. A hydraulic chamber to which an oil passage formed in the boss member 53 is open is formed between the piston 42 and the peripheral-walled disc member 52. When pressure oil is supplied to the hydraulic chamber, the piston 42 slides to press the inner friction plates and the outer friction plates, whereby the clutch mechanism 40 is engaged. Thus, rotation power transmitted from the engine output shaft ES to the input shaft portion 2a through the damper mechanism D is transmitted to the output shaft portion 2b. When the pressure oil is discharged from the hydraulic chamber, the piston 42 is returned by the spring, and the clutch mechanism 40 is disengaged.

The rotating electrical machine 3, which serves as a motor or a generator or both, is formed as a brushless DC motor. An annular stator 3a is fixed to an inner peripheral wall of the transmission housing 10. A cylindrical rotor 3b, which rotates about the rotation shaft center X, is supported by the clutch housing 50, and to be exact, is fitted onto an outer peripheral surface of a peripheral wall portion of the bowl-like member 51 of the clutch housing 50. Thus, the clutch housing 50 or the bowl-like member 51 functions as a rotor support member for supporting the rotor 3b. The inner peripheral wall of the transmission housing 10 to which the stator 3a is fixed forms a motor case for accommodating the rotating electrical machine 3, together with the first partition wall 11 and the second partition wall 12 which extend from the inner peripheral wall toward the rotation shaft 2. Moreover, the clutch housing 50 is also accommodated in the space formed by the motor case, that is, the space where the rotating electrical machine 3 is accommodated. That is, the clutch accommodating space for accommodating the clutch and the rotating-electrical-machine accommodating space for accommodating the rotating electrical machine 3 are formed in a nested state.

The stator 3a is formed by winding a coil onto a stator core formed by a stacked plate fixed to the inner peripheral wall of the transmission housing 10. Moreover, a shielding plate for blocking a magnetic flux leakage is provided around the coil. When a current flows in the coil of the stator 3a, a closed-loop magnetic flux is formed in a path formed by the coil, the shielding plate, and the stator core, and leakage of this magnetic flux is blocked by the shielding plate. The rotor 3b is formed by a stacked plate in which a permanent magnet is embedded, and an outer peripheral surface of the rotor 3b faces an inner peripheral surface of the stator 3b with a predetermined gap therebetween. The axially protruding portion 11a of the first partition wall 11 protrudes toward the rotating electrical machine 3 to form a boss-like region, and a rotation sensor (a resolver) RS for detecting the rotation position of the rotor 3b is disposed at a position radially outside the axially protruding portion 11a.

This rotating electrical machine 3 operates as a motor when a current is supplied from an electric power storage device (not shown), such as a battery, to the coil of the stator 3a under the control of a controller that is not shown, and the rotor 3b rotates, and the bowl-like member 51, the peripheral-walled disc member 52, and the boss member 53, that is, the clutch housing 50, rotates with the rotation of the rotor 3b. This rotating electrical machine 3 can operate also as an electric generator for charging the electric power storage device when the rotor 3b is rotated through the clutch mechanism 40 and the clutch housing 50 by the driving force of the engine E.

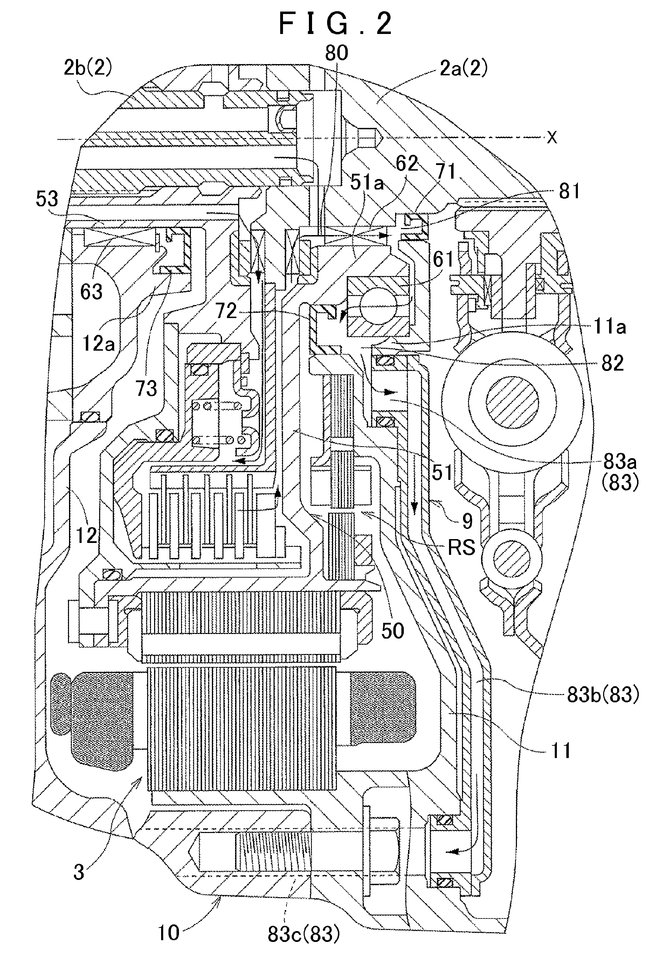

As can be seen from FIG. 2, the first bearing 61 is disposed in the space formed between the outer peripheral surface of the boss portion 51a of the bowl-like member 51 that forms the clutch housing 50, and the inner peripheral wall of the axially protruding portion 11a of the first partition wall 11. In order to substantially seal the space where the first bearing 61 is disposed, a second seal member 72 is provided so as to extend between the boss portion 51a of the bowl-like member 51 as a member on the clutch housing 50 side, and a portion of the axially protruding portion 11a as a member on the first partition wall side, which extends to the clutch housing side. Moreover, a first seal member 71 is provided so as to extend between a lower end of the first partition wall 11 that faces the input shaft portion 2a and is located on the engine E side of the second bearing 62, and the input shaft portion 2a. With this structure, a first oil chamber 81 is formed between the first seal member 71 and one side end (a side end on the engine side) of the first bearing 61, and a second oil chamber 82 is formed between the second seal member 72 and the other side end (a side end on the housing side) of the first bearing 61. The first oil chamber 81 is defined by the first partition wall 11, the boss portion 51a of the clutch housing 50, the input shaft portion 2a, the first bearing 61, the second bearing 62, and the first seal member 71. The second oil chamber 82 is defined by the axially protruding portion 11 a of the first partition wall 11, the boss portion 51a of the clutch housing 50, the first bearing 61, and the second seal member 72. In the present embodiment, the first oil chamber 81 is a space that extends from near the first seal member 71 and is in contact with one side end of the first bearing 61 that faces toward the engine, and the second oil chamber 82 is a space that extends from near the second seal member 72 and is in contact with the other side end of the first bearing 61 that faces toward the clutch housing. Note that, on the rotating electrical machine 3 side of the third bearing 63, that is, on the clutch housing 50 side of the third bearing 63, a third seal member 73 is provided so as to extend between the boss portion 12a of the second partition wall 12 and the boss member 53 of the clutch housing 50.

Since oil is supplied to the second bearing 62 through a supply oil passage 80 having the clutch housing 50 as an oil supply source, the supplied oil is supplied to the first oil chamber 81 through the second bearing 62. The oil supplied to the first oil chamber 81 enters the second oil chamber 82 through the first bearing 61. The oil entering the second oil chamber 82 is discharged to an appropriate portion in the transmission housing 10 through a discharge oil passage 83 that will be described in detail below.

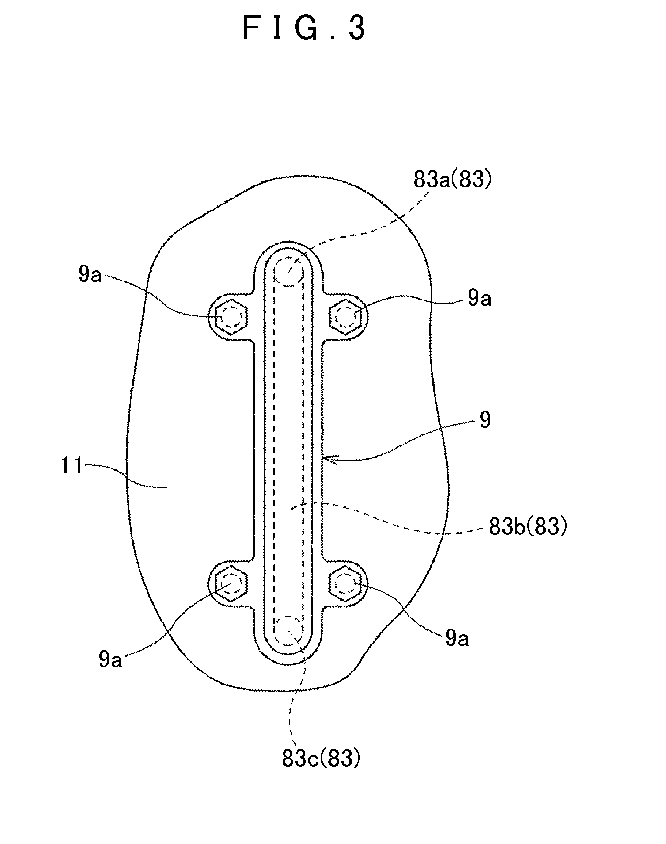

The discharge oil passage 83 is formed by a through hole as an oil passage 83a provided in the first partition wall 11 so as to open to the second oil chamber 82, an oil passage 83c provided in a wall body of the transmission housing 10, and an oil passage 83b extending along the first partition wall 11 in a radial direction of the rotation shaft center X in order to connect the oil passage 83a and the oil passage 83c. In the present embodiment, as shown also in FIG. 3, the oil passage 83b is formed in an oil passage bracket 9 attached to an outer surface of the first partition wall 11. The oil passage bracket 9 is attached to the first partition wall 11 by using attaching bolts 9a. Thus, the oil passage 83a and the oil passage 83b communicate with each other, and the oil passage 83c and the oil passage 83b communicate with each other, thereby forming the discharge oil passage 83 for discharging oil from the second oil chamber 82.

As can be seen from the above structure, in this vehicle drive device 1, the first bearing 61 is disposed in the space formed by sealing the space between the members that rotate relative to each other with the first seal member 71 and the second seal member 72. Moreover, oil is supplied through the supply oil passage 80 to the first oil chamber 61 that is in contact with the side end of the first bearing 61 on the engine side in this space, and the oil that reaches through the first bearing 61 the second oil chamber 82 that is in contact with the side end of the first bearing 61 on the clutch side is discharged through the discharge oil passage 83. Thus, the first bearing 61 is lubricated by the flowing oil in a desirable manner.

### [Other Embodiments]

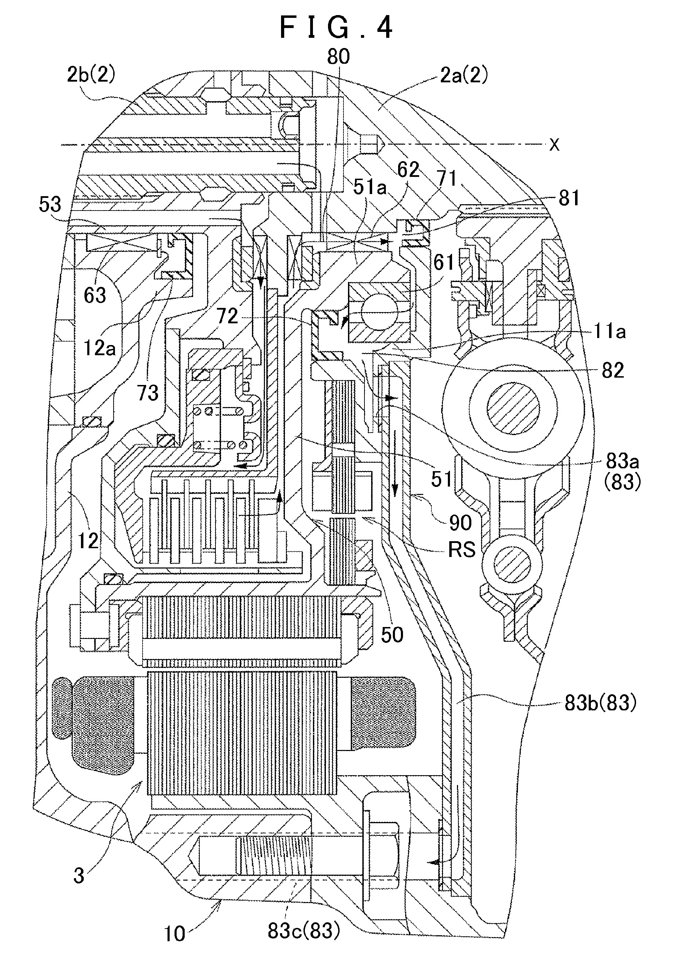

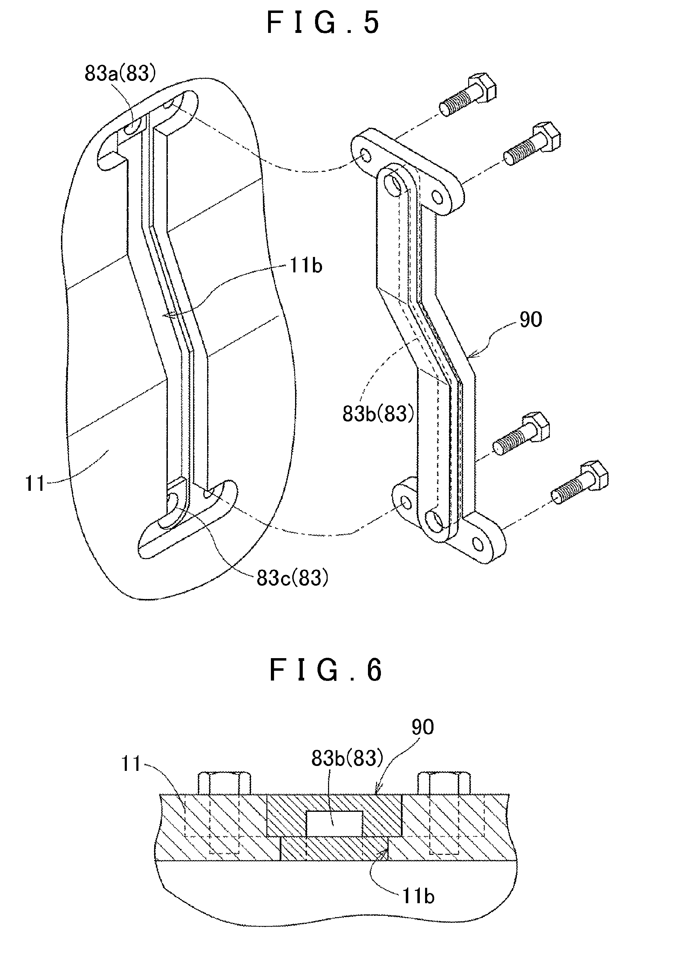

(1) In the above embodiment, the oil passage 83b, which forms the discharge oil passage 83 for discharging the oil that has lubricated the first bearing 61, is formed in the oil passage bracket 9 attached to the outer surface of the first partition wall 11. Alternatively, however, as shown in FIGS. 4, 5, and 6, the present invention may use a structure in which a cutout 11b is formed in the first partition wall 11, and the oil passage 83b is provided in an oil passage bracket 90 fitted in the cutout 11b. This cutout 11b extends substantially linearly in the radial direction of the rotation shaft center X in the first partition wall 11 from a region facing the second oil chamber 62 to a region facing the oil passage 83c provided in the wall body of the transmission housing 10, and has an elongated H-shape. As shown in FIG 6, the cutout 11b has a stepped cross-sectional outline shape, having the inner surface side narrower than the outer surface side, and the stepped surfaces of the stepped shape function as the attachment surfaces for the oil passage bracket 90. The stepped portions of the cutout 11b and both ends of the oil passage bracket 90 are extended in both lateral directions, and have substantially the same elongated H-shape in a plan view. As can be seen from FIG. 6, the oil passage bracket 90 is formed by two divided bodies, and a groove is formed in one of the divided bodies, forming a main part of the oil passage 83b. In order to cause the second oil chamber 82 and the groove formed in the oil passage bracket 90 to communicate with each other, a communication hole is provided in the middle of the stepped portion extended in both lateral directions, and at a corresponding position in the oil passage bracket 90. A similar communication hole is provided in order to cause the oil passage 83c provided in the wall body of the transmission housing 10 and the groove formed in the oil passage bracket 90 to communicate with each other. Fixing bolt holes for fixing the oil passage bracket 90 to the first partition wall 11 by bolts are provided in both ends of the laterally extended stepped portions of the cutout 11b, and at corresponding positions in the oil passage bracket 90. With this structure, this oil passage bracket 90 implements a function as a part of the first partition wall 11, and a function to form the discharge oil passage 83.
Note that the present invention does not exclude an embodiment in which the need for the oil passage bracket 90 is eliminated by forming the oil passage 83b directly in the first partition wall 11.

(2) In the above embodiment, the present invention is applied to a hybrid vehicle drive device in which the engine output is transmitted to the input side of the clutch 4 through the damper mechanism D, the output of the rotating electrical machine 3 is transmitted directly to the output side of the clutch 4, and the output of the clutch 4 is applied to the speed change mechanism VM. It should be understood that the present invention may also be applied to other vehicle drive devices, such as, a hybrid vehicle drive device having a torque converter. More specifically, in a hybrid drive device in which the rotor 3b of the rotating electrical machine 3 is provided so as to rotate integrally with a pump impeller of the torque converter, it is preferable that a bearing for rotatably supporting one or both of the pump impeller and the rotor be lubricated in a manner similar to that of the first bearing 61 in the above embodiment. In this case, the rotor 3b of the rotating electrical machine 3 may be directly supported by the pump impeller, or a rotor support member provided as a separate member from the pump impeller may be connected so as to rotate integrally with the pump impeller.

(3) Oil may be supplied to the first bearing 61 by using an oil supply system for feeding oil from a dedicated supply oil passage provided in the rotation shaft 2 and the partition wall to the first oil chamber 81, instead of supplying oil through an oil supply system of the clutch 4.

### INDUSTRIAL APPLICABILITY

The present invention is preferably used for a vehicle drive device that include a rotating electrical machine having a rotor and a stator, and a rotation shaft having a rotation shaft center.

### [Description of the Reference Numerals]

- 1:: vehicle drive device
- 2:: rotation shaft
- 2a:: input shaft portion
- 2b:: output shaft portion
- 3:: rotating electrical machine
- 3 a:: stator
- 3b:: rotor
- 4:: clutch
- 9:: oil passage bracket
- 10:: transmission housing
- 11:: first partition wall
- 11b:: cutout
- 12:: second partition wall
- 40:: wet multi-plate clutch mechanism
- 50:: clutch housing (rotor support member)
- 51:: bowl-like member
- 52:: peripheral-walled disc member
- 53:: boss member
- 61:: first bearing
- 62:: second bearing
- 63:: third bearing
- 71:: first seal member
- 72:: second seal member
- 80:: supply oil passage
- 81:: first oil chamber
- 82:: second oil chamber
- 83:: discharge oil passage
- 83a:: oil passage (discharge oil passage)
- 83b:: oil passage (discharge oil passage)
- 83c:: oil passage (discharge oil passage)
- E:: engine
- X:: rotation shaft center
- RS:: rotation sensor (resolver)

## Claims

1. A vehicle drive device that includes a rotating electrical machine having a rotor and a stator, and a rotation shaft having a rotation shaft center, the vehicle drive device comprising:
a partition wall defining at least a part of a space for accommodating the rotating electrical machine;
a rotor support member that rotates about the rotation shaft center and supports the rotor;
a bearing disposed between the rotor support member and the partition wall;
a first seal member that forms a first oil chamber that is in contact with one side end of the bearing;
a second seal member that forms a second oil chamber that is in contact with the other side end of the bearing;
a supply oil passage for supplying oil to the first oil chamber; and
a discharge oil passage for discharging oil from the second oil chamber.

2. The vehicle drive device according to claim 1, wherein
the rotation shaft is formed by an input shaft portion and an output shaft portion which are disposed coaxially with each other, and a clutch is provided between the input shaft portion and the output shaft portion, and
the rotor support member forms a clutch housing for accommodating the clutch, and the supply oil passage uses oil in the clutch housing as a supply source.

3. The vehicle drive device according to claim 1 or 2, wherein
the first oil chamber is defined at least by the partition wall and the rotation shaft, and the first seal member seals a space between the partition wall and the rotation shaft, and
the second oil chamber is defined at least by the partition wall and the rotor support member, and the second seal member seals a space between the partition wall and the rotor support member.

4. The vehicle drive device according to any one of claims 1 to 3, wherein
the discharge oil passage is disposed along the partition wall.

5. The vehicle drive device according to claim 4, wherein
the discharge oil passage extends in a radial direction of the rotation shaft center.

6. The vehicle drive device according to claim 4 or 5, wherein
the discharge oil passage includes an oil passage provided in the partition wall, and an oil passage provided in an oil passage bracket that is attached to an outer surface of the partition wall.

7. The vehicle drive device according to claim 4 or 5, wherein
the discharge oil passage is formed in an oil passage bracket, which is fitted in a cutout provided in the partition wall and forms a part of the partition wall.

8. The vehicle drive device according to any one of claims 1 to 7, wherein
the partition wall includes a cylindrical and axially protruding portion that protrudes toward the rotating electrical machine in a direction of the rotation shaft, and the rotor support member is rotatably supported by an inner peripheral surface of the axially protruding portion through the bearing, and
the first seal member seals a space between the rotation shaft and a radial inner end of the partition wall which is located on one side of the bearing, and the second seal member seals a space between the rotor support member and a portion of the axially protruding portion that extends to the other side of the bearing.

9. The vehicle drive device according to any one of claims 1 to 8, further comprising:
a second bearing disposed on an inner peripheral surface of a radial inner end of the rotor support member, wherein
the rotation shaft is supported by the rotor support member through the second bearing so as to be rotatable relative to the rotor support member, and
the supply oil passage is formed so as to pass through the second bearing.

10. The vehicle drive device according to any one of claims 1 to 9, further comprising:
a second partition wall disposed on an opposite side to the partition wall in an axial direction with the rotating electrical machine interposed therebetween, wherein
the space for accommodating the rotating electrical machine is formed between the partition wall and the second partition wall.

11. The vehicle drive device according to claim 10, further comprising:
a third bearing disposed on an inner peripheral surface of a radial inner end of the second partition wall, wherein
the rotation shaft connected to the rotor support member is rotatably supported by the second partition wall through the third bearing, and
a third seal member that seals a space between the second partition wall and the clutch housing is disposed on the rotating electrical machine side of the third bearing.

12. The vehicle drive device according to claim 2, wherein
the input shaft portion is connected to an engine, and the output shaft portion is connected to the rotor of the rotating electrical machine.

13. The vehicle drive device according to claim 8, wherein
a rotation sensor for detecting a rotation position of the rotor of the rotating electrical machine is disposed radially outside the axially protruding portion.

14. The vehicle drive device according to any one of claims 1 to 13, wherein the space for accommodating the rotating electrical machine is isolated from an oil flow path.
